(19) Europäisches Patentamt
European Patent Office
Office européen des brevets

(11) **EP 3 896 543 A1**

(12) **EUROPEAN PATENT APPLICATION**

(43) Date of publication:
**20.10.2021 Bulletin 2021/42**

(51) Int Cl.:
**G05B 23/02** *(2006.01)*

(21) Application number: **20169578.0**

(22) Date of filing: **15.04.2020**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME**<br>Designated Validation States:<br>**KH MA MD TN** | (71) Applicant: **Siemens Aktiengesellschaft**<br>**80333 München (DE)**<br><br>(72) Inventors:<br>• **Guennemann-Gholizadeh, Nikou**<br>**80336 München (DE)**<br>• **Hapfelmeier, Andreas**<br>**82054 Sauerlach (DE)** |

(54) **DEVICE FOR EVALUATING A CLASSIFICATION MADE FOR A MEASURED DATA POINT**

(57) A device (300) for evaluating a classification made for a measured data point of an apparatus by a trained isolation forest model comprising an ensemble of isolation trees, the measured data point (x) comprises several elements (x1, .., xn), each element representing a measured parameter, configured to
- obtain the measured data point (x) which was classified as anomaly,
- determine all normal paths in the ensemble of trees of the trained isolation forest model, which lead to a normal classification, a normal path having a length larger than an average length of all paths in all trees, each path comprising of such perturbed instances of the data point (x+p) which lead to the normal path when used as input to the trained isolation forest model a sequence of nodes which define an upper or lower limit of one of the parameter values,
- determine all perturbations (p) of each parameter, and
- output an upper and lower limit of the determined perturbations of the perturbed data points (x+p) which result to be classified as normal when applied to the trained isolation forest model.

FIG 1

EP 3 896 543 A1

**Description**

The present disclosure relates to a device and method for evaluating a classification made by an anomaly detector for a measured data point of an apparatus.

In various technical fields, there is a need to monitor operation of machines or machine systems. For example, in the field of oil and gas production or steal and paper mills, a large number of drives as combustion engines, electronic drives and pumps maybe monitored for purpose of providing preventive maintenance and anomaly detection and thereby insure high availability.

In order to efficiently monitor a large number of machines or apparatuses, it is desirable to utilise monitoring mechanism which is, at least in part based on artificial intelligence (AI). Such AI-based mechanism may analyse time-series data obtained by monitoring a plurality of machines and automatically identify anomalies behaviour and trigger measures to resolves issues causing the anomalies behaviour, e.g. by issuing a warning to an operator. When monitoring pumps, the AI-based mechanism may for example automatically classify a detected anomaly, e.g., as a congestion, a leakage, a broken shaft, or the like.

For anomaly detection, machine learning models are trained by time series of sensor data which characterise the operation status of the monitored machine and labelled as working in a normal or anormal state. The trained machine learning model is precedingly used to classify measured sensor data which are detected in an actual operation of the machine. Such an anomaly detector works like a black box as the classification of an input cannot be obviously or analytically checked for correctness. Black box machine learning models lack in explainability regarding their decisions which make their utilisation untrustworthy.

Isolation forest is one machine learning method used for anomaly detection which works on principals of isolating anomalies instead of the most common techniques of profiling normal points. For the isolation forest machine learning algorithm, there are no dedicated solutions explaining the output classification. In general, explaining an AI black box method uses non-black box methods, called proxy models. However, these do not explain why a black box method decided the way it does.

Therefore, it is the object of the present application to enable the user of an anomaly detector to understand the reasons for the classification result, which was output by machine learning model, especially output by an isolation forest model.

The object is solved by the features of the independent claims. The dependent claims contain further developments of the invention.

The first aspect relates to a device for evaluating a classification made for a measured data point of an apparatus by a trained isolation forest model comprising an ensemble of isolation trees, the measured data point comprises several elements, each element representing a measured parameter, configured to

- obtain the measured data point which was classified as anomaly,
- determine all normal paths in the ensemble of trees of the trained isolation forest model, which lead to a normal classification, wherein a normal path having a length larger than an average length of all paths in all trees of the ensemble of trees, each path comprising a sequence of nodes which define an upper and a lower limit of one of the parameter values,
- determine all perturbations of each parameter such that a perturbed instance of the data point leads to a normal path when used as input to the trained isolation forest model, and
- output an upper and lower limit of the perturbation of the perturbed instance of the data points which result to be classified as normal when applied to the trained isolation forest model.

This provides the user of an anomaly detector applying an isolation forest machine learning method with information on which parameters of the measured data point of the monitored apparatus cause the classification as anomaly and how the values of the parameters of the measured data point have to be shifted to turn it being classified as normal. This provides the user with trust in the black box-method and increases acceptability of the decisions of the anomaly detector. The measured parameters of the data points are, e.g., detected by one or several sensors applied to the monitored apparatus.

According to an embodiment the device is configured such, that the trained isolated forest model is trained by data representing normal behaviour of the apparatus.

The advantage is, that the AI-Algorithm learnt how a system performs in healthy, i.e., normal state.

According to a further embodiment the device is configured as such that the determining of all normal paths and the determining of the perturbation is performed by a mixed integer linear program.

A mixed integer linear program is a numerical deterministic global optimisation program which focuses on solving decision making models. The word decision is used within this document as a synonym for classification. Such a deterministic global optimisation tool focuses on finding a global solution for an optimisation problem whilst providing theoretical guarantees that the reported solution is indeed a global one, within some predefined tolerance. Therefore, the mixed integer linear program provides an available and proved tool for an optimisation task as required to determine normal paths and optimising the determined paths with respect to perturbations of the measured data point in an ensemble of trees.

According to an embodiment the device is configured such that the following constraints are applied in the mixed integer linear program. The constraints are

    a) for each tree of the ensemble of isolation trees only one path is determined which leads to the perturbed instance,
    b) in a determined path an inner node is evaluated to 0 or 1 depending whether an end of the determined path is reached from a considered inner node by selecting a left or right subsequent node, and
    c) for each parameter, the nodes of the longest path do not have contradicting parameter values.

These constraints when applied to the mixed integer program lead to all valid normal paths in the ensemble of trees which provide a path to a normal classification when the measured data point is perturbed by minimal required perturbations with respect to the measured data point. A perturbation means a small value added to a data point and each parameter respectively. Therefore, the closest value to a parameter of the measured data point can be determined and therefore the minimum change which is required to get this changed i.e. perturbed data point classified as normal. This allows the user to see whether the anomaly is caused by one or several parameters and how far the value of these parameters of the measured data point lies from a parameter value which would lead to be classified as "normal".

According to a preferred embodiment the device is configured such that the determined paths correspond to perturbed instances of the measured data point where the maximum number B of perturbed parameters is smaller than or equal to a predefined number B of perturbed parameters.

The predefined number can, e.g. be input by a user via a human machine interface or a graphical use interface to limit the output number of perturbed parameters to a predefined limit. Respectively, up to the maximum number of B parameter will be output, wherein each of the output parameter complied to the constraints a) to c) mentioned above. This allows concentration on the most significant parameters causing the classification of the measured data point as anomaly. If there is no input for the value of B available, the device, more detailed the processor configured to perform the mixed integer linear program, automatically selects the maximum number of existing parameters and perturbs each of these parameters.

In a further embodiment the device is configured such that the determined paths correspond to a perturbed instance of the measured data point having all perturbation values larger than a predefined value.

This setting remains small perturbations unconsidered and focuses on non-neglectable perturbations and respectively such parameters which are or have a value far apart from a parameter value required to be classified as normal. This facilitates to focus on those parameters contributing mainly to the "anomaly". This feature also provides an enhanced robustness of the mixed integer linear program.

In a further embodiment the device is configured such that an upper and lower limit of each parameter of a measured data point is output which results in a normal path.

This provides the user with a "valid" parameter value interval for each or selected parameters which lead to a normal classification. This provides a good overview on the parameter value intervals which a data point needs to have to be classified as normal.

In a further embodiment the device is configured to output an average threshold value being used to classify an instance of the measured data point as an anomaly and/or, after evading the measured data point, to output the path within a tree leading to a certain decision which has a higher or still similar length than the predefined threshold.

The average threshold complies to the average path length of all trees and is output as score.

In a preferred embodiment the device is configured such that the measured date point is part of the sequence of the data points measured over time by at least one sensor applied to the apparatus.

This defines the measured data point as a time series data point for example measuring parameters like temperature, pressure of the monitored apparatus at subsequent points in time or time intervals. The measured data point can also include parameters which are not directly measured e.g. physical parameters but being derived from one or several determined parameters of the monitored apparatus.

In the preferred embodiment the device is configured such that the apparatus comprises at least one of a pump, a mill, an electric motor, a combustion engine and a turbine.

These types of apparatus are preferably monitored using anomaly detection. Nevertheless, the device can be used to evaluate classifications of measured data points originating from any kind of apparatus from a printing press to controllers comprising parameters like rotating speed and contact pressure to electrical power and communication characteristics.

A second aspect of the invention relates to a method for evaluating a classification of an apparatus by a trained isolation forest model comprising an ensemble of isolation trees, the measured data point comprises several elements

each element representing a measured parameter comprising

- obtaining the measure data point which was classified as anomaly
- determining all normal path in the ensemble of trees of the trained isolation forest model, which lead to a normal classification, a normal path having a length larger than an average length of all paths in all trees, each path comprises a sequence of nodes which define an upper or lower limit of one of the parameter values,
- determining all perturbation of each parameter of such perturbed instances of the data point which lead to a normal path when used as input to the trained isolation forest model,
- outputting an upper and lower limit of the determined perturbation all of the perturbed starter point which result to be classified as normal when applied to the trained isolation model.

Usually only a probability value, i.e. a score, of the classified measured data point is provided by the anomaly detection approach. A user can only estimate by the value of the score whether the measured data point was clearly classified as anormal or whether it is very near to a normal measured data point. It does not provide any advice which of the parameters of the measured data point caused the classification nor how many parameters contributed to the classification as anomaly. With the disclosed method a user, for example an operator of the monitored apparatus, receives the parameters which cause this classification and the upper and lower limit of the respective parameter values which would be required to get such a measured data point classified as normal. From this information adaptions in the settings of the apparatus can be deduced and the settings of the apparatus can be changed accordingly. Further on, the source for the anomaly in the apparatus can be narrowed to a limited number of parameters and analysed in a better way.

A further aspect of the invention concerns a computer program product directly loadable into the internal memory of a digital computer, comprising software code portions for performing the steps of the method as described when the product is run on the digital computer.

In the above embodiments of the device or method, the apparatus may comprise at least one of a pump, a mill and electric motor, a combustion engine or a turbine. In this case the time series of measured data points may comprise for example a motor temperature, an inlet temperature, an operating power, a pressure inside the apparatus, a pressure outside the operator, a flow velocity, and furthermore.

In the following, embodiments of the present disclosure will be described in more detail and with reference to the accompanying drawings.

Figure 1     schematically illustrates an example of a monitoring environment including an embodiment of the inventive evaluation device.

Figure 2     schematically illustrates the principals for generating a tree applying an isolation forest method.

Figure 3     schematically illustrates an example of an isolation forest tree ensemble highlighting the paths of a measured sensor point which is classified as anomaly and an isolation forest tree ensemble showing the paths which result for a perturbed instance of the measured data point.

Figure 4     schematically illustrates an example of an isolation forest tree ensemble highlighting the constraints (3) in the preceding description.

Figure 5     schematically illustrates an isolation tree ensemble with paths determined for a measured data point being classified as anomaly and a respective perturbed instance of the same measured data point leading to be classified as normal.

Figure 6     illustrates an embodiment of the inventive method as a flow diagram.

It is noted that in the following detailed description of embodiments the accompanying drawings are only schematic and that the illustrated elements are not necessarily shown to scale. Rather, the drawings are intended to illustrate functions and/or cooperation of components. Here, it is to be understood that any connection or cabling of functional blocks, components, or other physical or functional elements could also be implemented by an indirect connection or cabling, e.g. via one or more intermediate elements. A connection or cabling of units or components can for example be implemented by a wire base, the wireless connection or a combination of a wire-based and a wireless connection. Functional blocks can be implemented by dedicated hardware, by firmware and/or software installed a programmable hardware and/or by a combination of dedicated hardware and firmware or software.

The evaluation device 300 focuses on explaining the decision of isolation forest algorithm as an unsupervised ensemble-based anomaly detection method. In general, anomaly detection models such as isolation forest, are trained on signals which present the normal behaviour also named as healthy status, of a system.

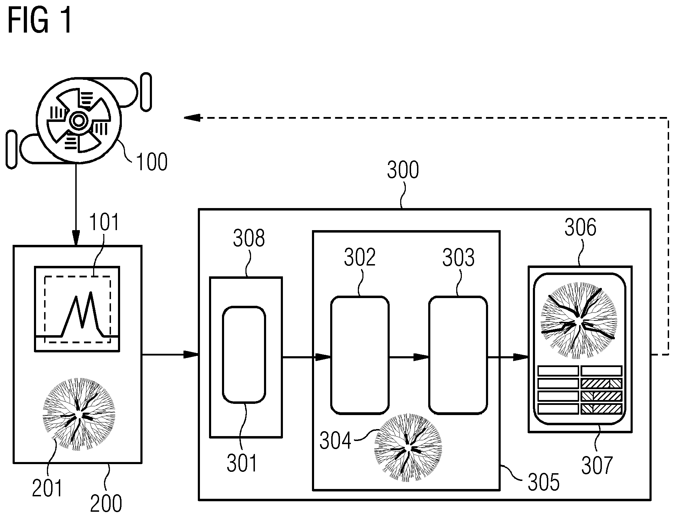

Figure 1 shows a scenario with a device 300 for evaluating a classification of a measured data point 101 which was measured by one or several sensors applied to an apparatus 100. Device 300 will be in the following also called evaluating device 300. The apparatus 100 can be any kind of apparatus like a combustion or electrical engine, a pump, a mill, but also machine, controller or devices applied in an automation plant or in a power grid.

The evaluation device 300 focuses on explaining the decision of isolation forest algorithm as an unsupervised ensemble-based anomaly detection method. In general, anomaly detection models such as isolation forest, are trained on signals which present the normal behaviour also named as healthy status, of a system.

The measured data point 101 comprises several elements, each element representing a measured parameter, like pressure, temperature, mass flow, etc. Further on the measured data point 101 is usually one data point in a sequence of data points measured over time. Measured is used in this context not only as physically measured but can also be derived by one or several information characterizing the monitored apparatus at the considered point in time.

The anomaly detector 200 comprises a trained anomaly detection model here especially an isolation forest algorithm. The trained isolation forest tree ensemble was trained by data points representing normal behaviour of the apparatus 100. The measured data points 101 from the apparatus 100 are therefore input to the isolation forest model 201 and classified representing the apparatus 100 in a normal or in an anormal status. The output of the anomaly detector 200 is a probability value, usually called score, between 0 and 1. Regarding the interpretability of the scores, a non-expert user probably knows that if the value of the score is high the probability of that measured data point being an anomaly would be very high. Usually the anomaly detector outputs whether the measured data point 101 is classified as normal or anormal and the value of the score. A user can only estimate by the value of the score whether the measured data point shows a clear anomaly or not. There are few or no further outputs of the anomaly detector 200 explaining the decision.

To overcome this problem the evaluation device 300 is configured to provide for a measured data point 101 and especially a measure data point 101 classified as anomaly, which parameters contribute and to which extent do these parameters contribute to the classification result. In other words, evaluation device provides information what is missing to classify the measure data point as representing a normal status of the monitored apparatus 100. Based on this information the apparatus 100 can be tuned, i.e. operation settings of the apparatus 100 can be adapted and/or the source of the anormal status can be tracked.

The evaluation detector 300 comprises an obtaining function 301 to obtain the measured data point 101 which is classified as anomaly. The measured data point is also named "x" in following. The obtaining function is, e.g., implemented in an input interface 308. The evaluation device 300 comprises a first determination function 302 which determines all normal paths in the trained ensemble of trees of the same trained isolation forest model 304, which lead to a normal classification, wherein a normal path having a length larger than an average length of all paths in all trees. The trained isolation forest model 304 must be identical as the trained isolation forest model 201 used in the anomaly detector 200. A normal path is a path which leads to a normal classification, wherein a normal classification is output when the lengths of the path is larger than an average length of all paths in all trees of the ensemble in the isolated forest model 304.

The evaluation device 300 comprises a second determination function 303 which determines a perturbation of each parameter of such perturbed instances of the measured data point x which lead to a normal path when used as input to the trained isolation forest model 304. The first and second determination function 302 and 303 are performed by a mixed integer linear program implemented e.g. on a processor 305. An upper and lower limit of the determined perturbations of the perturbed data points which result be classified as normal when applied to the trained isolation forest model 304 are output by an output function 307. The output function is for example implemented as a graphical user interface or display 306.

The evaluation device 300 can be implemented as a separate physical entity, obtaining the measured data point 101 by an external input interface 308. The evaluation device can also be implemented as a combined entity comprising the evaluation device and the anomaly detector. In this case the input interface will be implemented as an internal interface.

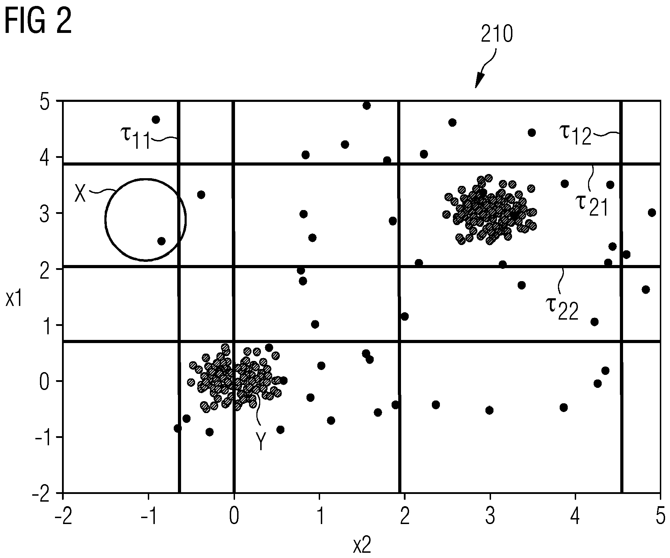

Figure 2 shows how a tree for an isolation forest approach is generated. The basic idea of the isolation forest algorithm is the tendency of anormal instances x in a set of data points 210 being easier to separate from the rest of a sample compared to normal points y. The data points x, y may comprise several elements representing each a parameter detected on the apparatus 200. Figure 2 shows two parameters, here x1 and x2 of each of the set of data points 210. In order to isolate a data point the algorithm recursively generates partitions on the set of data points 210 by randomly selecting the parameter x1, x2 of the data point and randomly selecting a split value $\tau 11$, $\tau 12$ for parameter x1 and split values $\tau 21$, $\tau 22$ for parameter x2 being the minimum and maximum values allowed for the parameter.

An example of random partitioning in a 2-dimensional dataset of normally distributed data point is shown in figure 2. It gets obvious that an anomaly classified data point X can be isolated by only a few partitions, wherein a data point classified as normal Y requires a higher number of partitions.

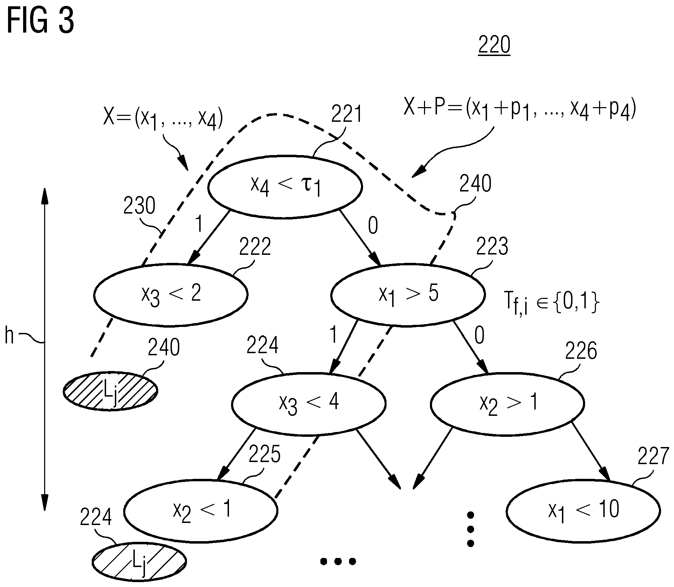

An example of an isolation tree 220 is shown in figure 3. The tree is built up by nodes 221, 222, 223, 224, 225, 226, 227 where an edge connects two nodes. Each node represents a partition and comprises the chosen parameter x1, x2, x3, x4 and the split value $\tau i$ of the parameter where the partition was set. For example, for a root node 221 which is the first node of a tree 220 a partition was set into parameter x4 at the parameter split value $\tau 1$. The pathlength h is defined by the number of edges needed to be traversed from a root node 221 to an end node 222 or 225. End nodes are called leaves. A short path 230, e.g., starting at root 221 and ending at node 222 result in an anomaly 240, whereas a long path, e.g., 230 starting from root 221 via node 223, 224 to 225 represents a normal state 241. The score determined for a measured data point x is provided by $s(x) = 2^{-(avg(h(x))/c)}$.

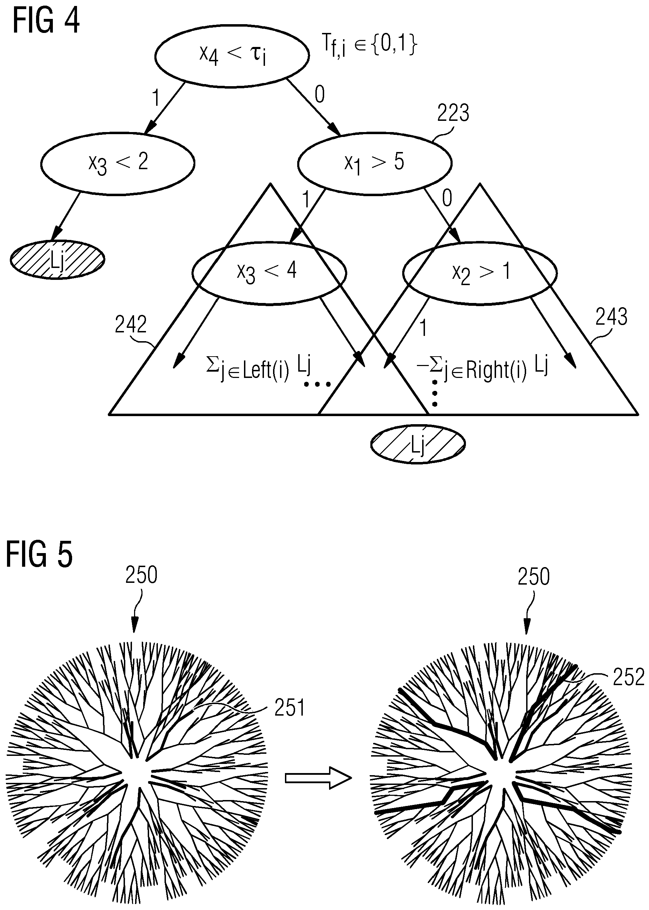

When looking for an interpretation, why the trained isolated forest model decides to classify a measured data point as anormal, it turns up that the measured data point when applied to the trees of the isolation tree ensemble, see 250 of figure 5, leads to short paths 251. This does not lead to an interpretation of the classification result, because it is just a number. Another possibility would be to evaluate every inner node e.g. node 212, 213 in the former example in figure 3. This does not provide an interpretation for the actual classification, because there are too many.

Therefore, it is the core idea to use discrimination and determine what is the minimum number of parameters to be changed, which are the parameters to be changed and by which value has the parameter to be changed to classify a measured data point as normal. In technical terms, how can the average path length be made a long as possible given a specific number of parameters allowed to change.

This is technically achieved by determining all normal paths in the ensemble of trees of the trained isolation forest model and by determining all perturbations of each parameter of such perturbed instances of the data point which lead to the normal path when used as input to the trained isolation forest model. Both determinations are performed by the mixed integer linear program implemented in the evaluation device 300, more specifically in the processor 305. The mixed integer linear program implemented in process 305 determines an optimum evading of the measured data point X, 101.

For a measured data point X, see also data point 101 in Figure 1, which is classified as abnormal, it is determined which of the parameters x1, x2, x3, x4 must be changed, with other word perturbed, and which value must the perturbation P for each parameter p1, p2, p3, p4 have, so that the perturbed measured data point X+P could be classified as normal.

In the case the measured data point is classified as anomaly, these perturbations will be big and might involve many parameters, while in case of a data point classified as normal the number of perturbations will be small. The paths leading to a normal classification are called normal paths. A normal path has a length which is larger than an average length of all paths in all trees of the isolated forest ensemble of trees. The

Technically the mixed integer linear program is configured to find the path of maximum path length that represents the perturbed instance X+P. The mixed integer linear program implemented on processor 305 of the evaluation device 300 is configured such to solve following equation:

$$Max_{\{T,L\}} f(T_*, L_*) = h_1 * L_1 + h_2 * L_2 + \cdots = \sum_{\{j=1\}} L_j * h_j \qquad (1)$$

where the variables $L_j \in \{0,1\}$ relate to each leaf in the tree and has the value 1, if the path ends here. The variable $T_{f,i} \in \{0,1\}$ relates to each inner node with the rule $x_f \leq \tau_i$ in the tree for which Lj=1, if the rule is true. $h_j$ denotes the height of the tree, i.e. the length of the path from the root to the leaf.

To determine all normal path and precedingly determine the relevant perturbation, i.e. to guarantee that the assignment (0/1) to the variables in the mixed-integer linear program corresponds to a "valid", normal path, following constraints have to be fulfilled simultaneously:

$$\sum_{\{j=1\}} L_j = 1 \qquad (2),$$

which allows in each tree that there is only one path which leads to a valid leaf. Every other leaf within the same tree is set to zero.

$$\sum_{j \in Left(i)} L_j \leq T_{f,i} \leq 1 - \sum_{j \in Right(i)} L_j \qquad (3),$$

where *Left*(*i*) denotes leaves in left subtree of the inner node and *Right*(*i*) denotes the leaves in the right subtree of an inner node. Figure 4 illustrates the leaves of the left subtree 242 and the leaves in the right subtree 243 of inner node 212. This constraint specifies which inner nodes should be considered to reach the valid leaf of the one path selected by the constrain 1 as mentioned above. The inner node 212 need to evaluate 0 or 1 depending on whether the selected leaf is part of the left or right subtree.

$$T_{f,i} \le T_{f,j} \qquad\qquad (4),$$

if the corresponding rules, i.e. $x_f \le \tau_i$ and $x_f \le \tau_j$ respectively have $\tau_i < \tau_j$. This constraint ensured that are no inconsistence rules in the longest path for each parameter F. As an example, these constrained provides that a long path no inner nodes occur with parameter value limits such as $x_f < 3$ and $x_f > 4$ which will lead to an inconsistency.

$$\sum_{\{features\}} \left\{ (1 - 0) - \left( T_{f,i} - T_{f,j} \right) \right\} \le B. \quad (5)$$

This constrained guarantees that the resulting path corresponds to a perturbed instance of the measured data point where the maximum number of perturbed parameters is smaller or equal to the specified value B. The value B can be predefined manually by a user or it can be automatically defined e.g. to the smallest value B such that a specific average path length is exceeded. That means that for those the parameters the isolation forest algorithm recognises a strong deviation from the corresponding normal appearance.

As a variation of the least described constraint the mixed integer linear program is configured such that only significant changes are determined by considering only non-neglectable perturbations. This constraint leads to an enhanced robustness of the mixed integer linear program implementation. Further on this improves the interpretability of the results since non-significant perturbations are usually not an indicator for being an anomaly or non-anomaly but only an algorithm artefact.

Figure 5 shows the trained isolation forest tree ensemble consisting of several isolation trees each tree having several paths with different length. An average length of all paths in all trees of the isolation forest ensemble is calculated preferably at a training stage of the isolation forest tree ensemble. An anomaly score of a measured data point is calculated by $s(x) = 2^{-(avg(h(x))/c)}$

The paths bold marked on the isolation forest tree ensemble 250 shown at the left side of figure 5, one of them marked by reference sign 251 were evaluated for the measured data point and resulted in a classification as an anomaly. In the same isolation forest tree ensemble 250 depicted at the right side of figure 5, paths of a perturbed instance 252 are shown, see bolder lines.

As a result of the mixed integer linear program implemented the processor 305 in device 300 an upper and lower bound of each parameter is output in case of normal behaviour for each considered measured data point. In case the measured data point was classified as anomaly the mixed integer linear program function 305 output those parameters which must be changed so that classification of the data point changes to normal when used as input into the isolation forest model. This means, for any measured data point X it is possible to find a perturbation P which is big enough that a perturbed instance X+P evades being correctly classified. As the data point X consists of a number of n parameters x1,..., xn, a perturbation P consists of a number of n perturbations p1, ..., pn changing the parameter xi by the perturbation pi. One or several of the parameters xi and/or perturbations pi can have the value zero. If a value B is provided, having, e.g., the value 3, only the preturbations of those B, here 3, parameters are output, which would result in a normal classification. In addition, an average threshold can be derived from the output of the mixed integer linear program which is used to classify a measured date point as an anomaly and to output the paths within the same tree which lead to a higher or similar length.

The described output of the mixed integer linear program is displayed on the output interface 306 which is optionally configured as a graphical user interface. Beside displaying the upper and lower limit of the determined perturbation, i.e. the value of the parameter by which the same parameter of the measured data point has to be changed so that it would be classified as normal when input to the isolation forest. The output interface 306 respectively graphical user interface may additionally comprise an input unit which allows the user to select the number B of parameters to which the perturbations or upper and lower limit shall be provided. This allows concentrating on the most critical parameters influencing the classification of the measure data point.

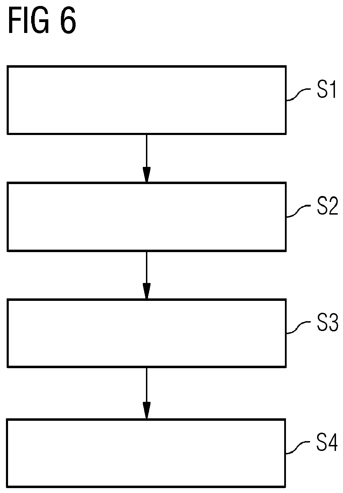

The evaluation method will be shortly explained using the flow diagram shown in figure 6. The first step S1 the measured data point, especially a measured data point classified as anormal, is obtained, e.g., from an anomaly detector. In the next step S2 all normal paths in the ensemble of trees of the trained isolation forest model are determined. Therefore, all normal paths with an average length of all paths in all trees have to be determined which provide a measure or threshold for paths leading to a normal classification. Normal paths are all those paths having a length larger than these determined average length. This is achieved by maximising the equation (1) provided above applying it to a mixed integer linear program. In step S3 all perturbation of each parameter of such perturbed instances of data point are determined which lead to a normal path when used as input to the trained isolation forest model. In step S4 the upper and lower limit of the perturbation of the perturbed data points are output which result to be classified as normal when applied to the trained isolation forest model.

With these methods and device, the reason for the classification result of data points are provided and can be visualised to the user so that it can trace and see how and why this classification was calculated. With this explainability the user gains trust into the decisions and classifications an unsupervised isolation forest tree ensemble provides and that these values are reliable. The results of the method can be easily understood through the visualisation.

It is to be understood that the above description of examples is intended to be illustrative and that the illustrated concepts are susceptible to various modifications.

## Claims

1. Device (300) for evaluating a classification made for a measured data point of an apparatus by a trained isolation forest model comprising an ensemble of isolation trees, the measured data point (x) comprises several elements (x1, .., xn), each element representing a measured parameter, configured to

   - obtain the measured data point (x) which was classified as anomaly,
   - determine all normal paths in the ensemble of trees of the trained isolation forest model, which lead to a normal classification, a normal path having a length larger than an average length of all paths in all trees, each path comprising of such perturbed instances of the data point (x+p) which lead to the normal path when used as input to the trained isolation forest model a sequence of nodes which define an upper or lower limit of one of the parameter values,
   - determine all perturbation (p) of each parameter, and
   - output an upper and lower limit of the determined perturbations of the perturbed data points (x+p) which result to be classified as normal when applied to the trained isolation forest model.

2. Device according to claim 1, wherein the trained isolated forest model is trained by data representing normal behaviour.

3. Device according to any of the preceding claims, wherein the determining of all normal paths and the determining of the perturbations is performed by a mixed-integer linear program.

4. Device according to claim 3, wherein the following constraints are applied in mixed-integer linear program:

   a) for each tree of the ensemble of isolation trees only one path is determined which leads to the perturbed instance,
   b) in a determined path an inner node is evaluated to 0 or 1 depending whether an end of the determined path is reached from a considered inner node by selecting a left or right subsequent node, and
   c) for each parameter, the nodes of the longest path do not have contradicting parameter values.

5. Device according to claim 3 or 4, wherein the determined path corresponds to a perturbed instance of the measured data point where the maximum number of perturbed parameters is smaller than or equal to a predefined maximum number (B) of perturbed parameters.

6. Device according to claim 3 to 5, wherein the determined paths correspond to a perturbed instance of the measured data point having all perturbation values larger than a predefined value.

7. Device according to any of the preceding claims, wherein the device is configured to output an upper and lower limit of each parameter of a measured data point which results in a normal path.

8. Device according to any of the preceding claims, wherein the device is configured to output an average threshold being used to classify an instance of the data point as an anomaly and/or, after evading a data point, to output the path within a tree leading to a certain classification which has a higher or still similar length than the predefined threshold.

9. Device according to any of the preceding claims, wherein the measured data point is path of a sequence of data points measured over time by at least one sensor.

10. The device according to any one of the preceding claims, wherein the measured data point (X) are monitored on at least one of a pump, a mill, an electric motor, a combustion engine, and a turbine.

**11.** Method for evaluating a classification made for a measured data point of an apparatus by a trained isolation forest model comprising an ensemble of isolation trees, the measured data point (x) comprises several elements (x1, .., xn), each element representing a measured parameter, comprising

- obtaining (S1) the measured data point (x) which was classified as anomaly,
- determining (S2) all normal paths in the ensemble of trees of the trained isolation forest model, which lead to a normal classification, wherein a normal path having a length larger than an average length of all paths in all trees,
- determining (S3) all perturbations (p) of each parameter of such perturbed instances of the data point (x+p) which lead to a normal path when used as input to the trained isolation forest model,
- outputting (S4) the upper and lower limit of the perturbation of the perturbed data points (x+p) which result to be classified as normal when applied to the trained isolation forest model.

**12.** Method according to claim 11, wherein comprising all features which are performed by a device according to any of claims 2 to 10.

**13.** A computer program product directly loadable into the internal memory of a digital computer, comprising software code portions for performing the steps of one of claims 11 or 12 when said product is run on said digital computer.

FIG 1

FIG 2

# FIG 3

<u>220</u>

$X = (x_1, ..., x_4)$     221     $X + P = (x_1 + p_1, ..., x_4 + p_4)$

$x_4 < \tau_1$

230

1    222      0     240     223

$x_3 < 2$        $x_1 > 5$     $T_{f,i} \in \{0,1\}$

h

240     224     1     0     226

$L_j$        $x_3 < 4$        $x_2 > 1$

225                227

224    $x_2 < 1$              $x_1 < 10$

$L_j$

• • •

## FIG 4

$T_{f,i} \in \{0,1\}$

$x_4 < \tau_i$

1

0

$x_3 < 2$

$x_1 > 5$ — 223

Lj

1

0

242

$x_3 < 4$

$x_2 > 1$

243

$\sum_{j \in \text{Left}(i)} Lj$

1

$-\sum_{j \in \text{Right}(i)} Lj$

Lj

## FIG 5

250

250

251

252

FIG 6

Europäisches
Patentamt

European
Patent Office

Office européen
des brevets

## EUROPEAN SEARCH REPORT

Application Number

EP 20 16 9578

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 451 219 A1 (KBC GROEP NV [BE]) 6 March 2019 (2019-03-06) * paragraph [0049] - paragraph [0062]; figures 1a-4 * | 1-13 | INV. G05B23/02 |
| X | US 10 045 218 B1 (STAPLETON PADRAIG [US] ET AL) 7 August 2018 (2018-08-07) * column 13, line 45 - column 16, line 11 * | 1-13 | |
| X | Sheng Xu: "POLITECNICO DI MILANO Machine Learning Techniques for Fault Detection in Chemical Processes. The Tennessee Eastman Process case study", , 31 December 2019 (2019-12-31), XP055726218, Retrieved from the Internet: URL:https://www.politesi.polimi.it/bitstre am/10589/151257/9/Machine%20Learning%20Tec hniques%20for%20Fault%20Detection%20in%20C hemical%20Processes.pdf [retrieved on 2020-08-31] * page 32 - page 40 * | 1-13 | |

TECHNICAL FIELDS SEARCHED (IPC)

G05B

The present search report has been drawn up for all claims

| Place of search | Date of completion of the search | Examiner |
|---|---|---|
| Munich | 1 September 2020 | Rakoczy, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 896 543 A1**

## ANNEX TO THE EUROPEAN SEARCH REPORT
## ON EUROPEAN PATENT APPLICATION NO.

EP 20 16 9578

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2020

| Patent document cited in search report | | Publication date | Patent family member(s) | | Publication date |
|---|---|---|---|---|---|
| EP 3451219 | A1 | 06-03-2019 | AU | 2018326573 A1 | 06-02-2020 |
| | | | CA | 3070309 A1 | 07-03-2019 |
| | | | EP | 3451219 A1 | 06-03-2019 |
| | | | EP | 3676740 A1 | 08-07-2020 |
| | | | WO | 2019043163 A1 | 07-03-2019 |
| US 10045218 | B1 | 07-08-2018 | NONE | | |